# EUROPÄISCHE PATENTSCHRIFT

(11) **EP 2 247 472 B1**
(45) Veröffentlichungstag und Bekanntmachung des Hinweises auf die Patenterteilung: **07.05.2014**
(21) Anmeldenummer: 09717146.6
(22) Anmeldetag: 04.03.2009
(51) Int. Cl.: B60R 21/201, B60R 21/2165, B60R 21/215

(54) **AIRBAGABDECKUNG ZUR AUFNAHME EINES GASSACKPAKETES FÜR EIN AIRBAGMODUL EINES KRAFTFAHRZEUGS SOWIE VERFAHREN ZU DEREN HERSTELLUNG**
AIRBAG COVER FOR RECEIVING AN AIRBAG PACKAGE FOR AN AIRBAG MODULE OF A MOTOR VEHICLE AND METHOD FOR THE PRODUCTION THEREOF
CACHE D'AIRBAG CONÇU POUR RECEVOIR UN PAQUET D'AIRBAG POUR UN MODULE D'AIRBAG D'UN VÉHICULE À MOTEUR ET PROCÉDÉ DE FABRICATION CORRESPONDANT

(30) Priorität: 04.03.2008 DE 102008012944; 03.04.2008 EP 08075277; 18.04.2008 DE 102008019730
(43) Veröffentlichungstag der Anmeldung: 10.11.2010
(73) Patentinhaber: Takata AG, 63743 Aschaffenburg (DE)
(72) Erfinder: PRADEL, Andreas, 10318 Berlin (DE); SCHRÖDER, Dirk, 15366 Neuenhagen (DE)
(74) Vertreter: Staroske, Sandro
(86) Internationale Anmeldenummer: PCT/EP2009/052547
(87) Internationale Veröffentlichungsnummer: WO 2009/109598

(56) Entgegenhaltungen:
- DE-U1-202006 009 205
- US-A1- 2005 263 988
- US-A1- 2006 249 932

## Beschreibung

Die Erfindung betrifft eine Airbagabdeckung zur Aufnahme eines Gassackpaketes eines Airbagmoduls gemäß Anspruch 1, ein Verfahren zur Herstellung einer solchen Airbagabdeckung gemäß Anspruch 11 sowie weiterhin ein Verfahren zur Anordnung eines Gassackes in der Airbagabdeckung gemäß Anspruch 12.

Es ist bekannt, einen Gassack für ein Airbagmodul eines Kraftfahrzeugs, der in einem Crash-Fall zum Schutz eines Fahrzeuginsassen mit Gas befüllt wird und sich hierbei beispielsweise zwischen dem zu schützenden Fahrzeuginsassen und der Fahrzeugkarosserie eines Kraftfahrzeugs entfaltet, in Form eines zusammengestauchten Gassackpaketes in einer Airbagabdeckung zu verstauen, die das Gassackpaket, z. B. topfförmig, zumindest teilweise umschließt.

Bekannte Airbagabdeckungen der genannten Art sind typischerweise als eine (aus Kunststoff bestehende) im Wesentlichen formstabile, allenfalls begrenzt elastische Kappe ausgebildet, die mit einer Aufreißgeometrie versehen ist, entlang der die Kappe beim Aufblasen eines hierin angeordneten Gassackes aufreißt, um eine Öffnung für den sich beim Aufblasen entfaltenden Gassack freizugeben.

Das Dokument DE 2006 009 205 U1 beschreibt eine Airbageinrichtung für ein Kraftfahrzeug mit einem zum Schutz eines Fahrzeuginsassen aufblasbaren Gassack, einer Aufnahme, in der der Gassack als Gassackpaket angeordnet ist und die eine Austrittsöffnung aufweist, durch die hindurch der Gassack beim Aufblasen aus der Aufnahme austreten und expandieren kann, und einer flexiblen Schutzabdeckung, die das Gassackpaket im Bereich der Austrittsöffnung überdeckt. Die Schutzabdeckung umfasst zwei flexible, flächige Schutzelemente, die jeweils an der Aufnahme festgelegt sind und die über mindestens eine auftrennbare Aufreißlinie miteinander in Verbindung stehen und die den Gassack beim Aufblasen zumindest während eines ersten Zeitabschnittes der Expansion des Gassackes flankieren. Zwischen der Schutzabdeckung und dem als Gassackpaket vorgesehenen Gassack ist eine flexible Führungslage angeordnet, die mit einem ersten der flächigen Schutzelemente dauerhaft verbunden ist, so dass das erste flächige Schutzelement beim Aufblasen des Gassackes zusammen mit der Führungslage eine den Gassack flankierende Verbundlage bildet.

Der Erfindung liegt das Problem zugrunde, eine neue Airbagabdeckung, ein Verfahren zu deren Herstellung sowie ein Verfahren zur Integration eines Gassackpaketes in eine solchen Airbagabdeckung bereitzustellen, die sich bei einfacher Handhabbarkeit durch Unterstützung der Entfaltung eines Gassackes wie durch niedriges Gewicht auszeichnet.

Dieses Problem wird erfindungsgemäß hinsichtlich der Airbagabdeckung durch die Merkmale des Anspruchs 1 sowie hinsichtlich der Verfahren durch die Merkmale des Anspruchs 11 bzw. 12 gelöst.

Danach besteht die Airbagabdeckung aus einem flexiblen, vorteilhaft außerdem dehnbaren, Material, so dass sich die (weiche) Airbagabdeckung an die Form eines darin angeordneten Gassackpaketes anpassen kann.

Eine solche Airbagabdeckung kann in einfacher Weise und mit geringem Gewicht, beispielsweise aus einem textilen Material, Kunststoff oder Leder, hergestellt werden und ist dabei an eine jeweilige Fahrzeugumgebung der Airbagabdeckung anpassbar, was insbesondere für solche Abschnitte der Airbagabdeckung vorteilhaft ist, die (als so genannte Sichtflächen) - bezogen auf den bestimmungsgemäß in ein Kraftfahrzeug eingebauten Zustand der Airbagabdeckung bzw. des Airbagmodules - im Fahrzeuginnenraum des Kraftfahrzeugs (für einen Fahrzeuginsassen) sichtbar sind (und zwar beim bestimmungsgemäßen Normalgebrauch des Fahrzeugs, ohne dass zusätzlich spezielle Maßnahmen für eine Sichtbarmachung der Airbagabdeckung getroffen würden).

Die Airbagabdeckung lässt sich aus einem oder mehreren flexiblen Materialzuschnitten herstellen, die in geeigneter Weise miteinander verbunden werden, wobei ein Teil der Verbindungen als beim Aufblasen und Entfalten eines in die Airbagabdeckung angeordneten Gassackes auftrennbare (aufreißbare) Verbindungen ausgebildet ist, so dass das Entfaltungsverhalten des Gassackes gezielt beeinflusst werden kann. Erfindungsgemäß weist die Airbagabdeckung einen das Gassackpaket umgreifenden Mantelabschnitt und einen an einer Stirnseite des Mantelabschnittes vorgesehenen Deckabschnitt auf, wobei letzterer beim Entfalten des Gassackes zumindest teilweise vom Mantelabschnitt gelöst werden kann, um eine Austrittsöffnung für den sich entfaltenden Gassack freizugeben.

Aufgrund der Flexibilität sowie gegebenenfalls Dehnbarkeit der Airbagabdeckung ist dabei ein Entfalten des Gassackes nicht erst dann möglich, wenn bestimmte Verbindungen der Airbagabdeckung aufgetrennt worden sind, sondern die Flexibilität und gegebenenfalls Dehnbarkeit der Airbagabdeckung erlaubt eine gewisse Ausdehnung des sich entfaltenden Gassackes schon in dem Zustand, in dem noch kein Auftrennen bestimmter Verbindungen der Airbagabdeckung erfolgt ist.

Dabei kann insbesondere auch vorgesehen sein, dass Teile der flexiblen Wand der Airbagabdeckung, welche das Gassackpaket aufnimmt, in mindestens eine auftrennbar fixierte Schlaufe gelegt sind, wobei die Fixierung der Schlaufe(n) unter dem Druck des sich beim Aufblasen entfaltenden Gassackes lösbar ist, so dass sich die flexible Wand der Airbagabdeckung im Bereich einer jeweiligen Schlaufe entsprechend vergrößert und so eine weitere Ausdehnung des Gassackpaketes noch innerhalb der Airbagabdeckung zulässt bzw. sogar fördert.

Um eine erfindungsgemäß ausgestaltete flexible Airbagabdeckung mit einem hierin aufzunehmenden Gassackpaket zu einer Baueinheit (Airbagbaueinheit) zusammenzufassen, ist es nicht, wie im Stand der Technik üblich, zwingend erforderlich, dass Gassackpaket in die Abdeckung einzupressen, sondern die Abdeckung kann unter Ausnutzung ihrer Flexibilität auch durch Umschlagen über das Gassackpaket gestülpt werden, wobei weiterhin Fixiermittel, z.B. in Form eines am Gassackpaket umlaufenden elastischen Ringes (insbesondere ausgebildet als Kunststoffband), zur Fixierung der Abdeckung an einem Modulträger oder einem sonstigen tragenden Teil nach dem Umschlagen der Abdeckung dienen können.

Außerdem kann vorgesehen sein, dass der Gassack - vor dem Einbringen in die Airbagabdeckung, insbesondere durch Umschlagen der Airbagabdeckung, wobei diese über das Gassackpaket gestülpt wird - an mindestens einer Stelle mit der Airbagabdeckung, insbesondere einer Deckfläche der Airbagabdeckung, verbunden wird. Hierbei kann der Gassack vorteilhaft erst dann zu einem Gassackpaket zusammengestaucht werden, nachdem er bereits an mindestens einer Stelle mit der Airbagabdeckung, insbesondere einer Deckfläche der Airbagabdeckung, verbunden worden ist.

Die Verbindung des Gassackes mit der Airbagabdeckung muss dabei nicht unmittelbar, direkt erfolgen, sondern es kann hierfür auch eine Zwischenlage vorgesehen sein, die einerseits mit der Airbagabdeckung und andererseits mit dem Gassack verbunden wird.

Die Verbindung des Gassackes mit der Airbagabdeckung, insbesondere mit deren Deckabschnitt, hat weiterhin den Vorteil, dass die relative Lage des mit der Airbagabdeckung verbundenen Abschnittes des Gassackes bezüglich der Airbagabdeckung, insbesondere bezüglich deren Deckabschnitt, stets gleich bleibt, auch bei einem lenkradintegrierten Fahrerairbagmodul.

Dabei kann einerseits vorgesehen sein, dass der Deckabschnitt der Airbagabdeckung auch nach dem Entfalten des Gassackes zumindest noch teilweise mit dem Mantelabschnitt verbunden bleibt, also der Deckabschnitt abschnittsweise fest (und nicht aufreißbar) mit dem Mantelabschnitt verbunden ist. Andererseits kann die Airbagabdeckung aber auch so ausgelegt sein, dass deren Deckabschnitt ausschließlich über auftrennbare bzw. aufreißbare Verbindungsstellen mit dem Mantelabschnitt verbunden ist, so dass beim Aufblasen und Entfalten eines in der Airbagabdeckung angeordneten Gassackes der Deckabschnitt der Airbagabdeckung insgesamt vom Mantelabschnitt abgetrennt wird. Um in einem solchen Fall zu verhindern, dass der Deckabschnitt der Airbagabdeckung beim Aufblasen und Entfalten des Gassackes unkontrolliert in den Fahrzeuginnenraum geschleudert wird, kann eine dauerhafte Verbindung zwischen dem Deckabschnitt und dem in der Airbagabdeckung angeordneten Gassack (gegebenenfalls indirekt über eine Zwischenlage) hergestellt sein.

Aufgrund der flexiblen und damit vergleichsweise weichen Ausgestaltung der Airbagabdeckung und insbesondere auch des Deckabschnittes der Airbagabdeckung führt dessen dauerhafte Verbindung mit dem Gassack nicht zu einem erhöhten Verletzungsrisiko für einen Fahrzeuginsassen; vielmehr kann - bei geeigneter Wahl eines flexiblen Materials für den Deckabschnitt - die Oberflächenbeschaffenheit der aus dem Gassack und dem daran fixierten Deckabschnitt bestehenden Gaskissenanordnung sogar im Hinblick auf eine Schutzwirkung für einen Fahrzeuginsassen im Crash-Fall optimiert werden.

Die aus einem flexiblen Material bestehende Airbagabdeckung bildet vorteilhaft die einzige Abdeckung, die zur Aufnahme des in einem Crash-Fall aufblas- und entfaltbaren

Gassackpaketes dient. Es handelt sich also insbesondere nicht nur um eine flexible Umhüllung eines zusammengefalteten Gassackpaketes, die zusammen mit dem Gassackpaket in einer weiteren, formstabilen Modulaufnahme verstaut wird; sondern die flexible Airbagabdeckung soll das darin aufgenommene Gassackpaket - vor dessen Aufblasen und Entfalten - vom zu schützenden Fahrzeuginsassen trennen. Demnach sollen außerhalb der flexiblen Airbagabdeckung keine weiteren Modulkomponenten vorgesehen sein, die der Aufnahme des zugeordneten Gassackpaketes dienen. Mit anderen Worten ausgedrückt, bildet die flexible Airbagabdeckung vorteilhaft die äußerste Umhüllung des entsprechenden Gassackpaketes - zumindest in Richtung auf den mittels des entsprechenden Airbagmoduls zu schützenden Fahrzeuginsassen sowie ggf. in einer Richtung quer zu der Hauptentfaltungsrichtung, entlang der sich der Gassack beim Aufblasen in Richtung auf einen zu schützenden Fahrzeuginsassen ausdehnt.

Die Airbagabdeckung kann weiterhin dazu dienen bzw. zumindest dazu beitragen, einen darin aufgenommenen Gassack als Gassackpaket in einem zusammengestauchten (insbesondere komprimierten) Zustand zu halten (indem sich der Gassack an jener Abdeckung, genauer deren Innenseite, abstützt).

Eine flexible Airbagabdeckung lässt sich vorteilhaft aus mindestens einem (ebenen) Materialzuschnitt herstellen, indem Bereiche des mindestens einen flexiblen Materialzuschnittes an geeigneten Verbindungsstellen (die zumindest teilweise als auftrennbare bzw. aufreißbare Verbindungsstellen ausgestaltet sind) miteinander verbunden werden.

Weitere Einzelheiten und Vorteile der Erfindung werden bei der nachfolgenden Beschreibung von Ausführungsbeispielen anhand der Figuren deutlich werden.

Es zeigen:
- Fig. 1: eine perspektivische Explosionsdarstellung eines Airbagmoduls mit einer flexiblen Airbagabdeckung;
- Fig. 2a, 2b: vorbereitende Schritte zum Überstülpen einer Airbagabdeckung der in Figur 1 gezeigten Art über einen Gassack des Airbagmoduls durch Umschlagen der Airbagabdeckung;
- Fig. 3a: eine schematische Seitenansicht einer ersten Ausführungsform einer flexiblen Airbagabdeckung gemäß Figur 1 zusammen mit einem darin angeordneten Gassack;
- Fig. 3b: einen Querschnitt durch die Anordnung aus Figur 3a ohne Gassack;
- Fig. 4a: eine schematische Seitenansicht einer zweiten Ausführungsform einer flexiblen Airbagabdeckung gemäß Figur 1 zusammen mit einem darin angeordneten Gassack;
- Fig. 4b: einen Querschnitt durch die Anordnung aus Figur 4a ohne Gassack;
- Fig. 5a: eine schematische Seitenansicht einer dritten Ausführungsform einer flexiblen Airbagabdeckung gemäß Figur 1 zusammen mit einem darin angeordneten Gassack;
- Fig. 5b: einen Querschnitt durch die Anordnung aus Figur 5a ohne Gassack;
- Fig. 6a: eine schematische Seitenansicht einer vierten Ausführungsform einer flexiblen Airbagabdeckung gemäß Figur 1 zusammen mit einem darin angeordneten Gassack;
- Fig. 6b: einen Querschnitt durch die Anordnung aus Figur 6a ohne Gassack;
- Fig. 7: ein Airbagmodul der in Figur 1 gezeigten Art, integriert in ein Lenkrad, im entfalteten Zustand des Gassackes, wobei die flexible Airbagabdeckung einen aufklappbare Deckabschnitt aufweist;
- Fig. 8: ein Airbagmodul der in Figur 1 gezeigten Art, integriert in ein Lenkrad, im entfalteten Zustand des Gassackes, wobei die Airbagabdeckung einen mit dem Gassack fest verbundenen Deckabschnitt aufweist;
- Fig. 9: eine Querschnittsdarstellung eines Mantelabschnittes einer flexiblen Airbagabdeckung, der mehrere über Reißnähte miteinander verbundene Materialzuschnitte aufweist.
- Fig. 10a: eine Abwandlung des Ausführungsbeispieles aus Figur 9, wobei an einem einteiligen Mantelabschnitt einer flexiblen Airbagabdeckung über Reißnähte mehrere Schlaufen gebildet sind;
- Fig.10b: den Mantelabschnitt aus Figur 10a nach einem Auftrennen der Reißnähte;
- Fig. 11a: ein erstes Ausführungsbeispiel ebenen Materialzuschnittes zur Bildung einer flexiblen Abdeckung gemäß den Figuren 3a und 3b;
- Fig. 11b: ein zweites Ausführungsbeispiel ebenen Materialzuschnittes zur Bildung einer flexiblen Airbagabdeckung gemäß den Figuren 3a und 3b;
- Fig. 12a: ein erstes Ausführungsbeispiel ebenen Materialzuschnittes zur Bildung einer flexiblen Airbagabdeckung gemäß den Figuren 4a und 4b;
- Fig. 12b: ein zweites Ausführungsbeispiel ebenen Materialzuschnittes zur Bildung einer flexiblen Airbagabdeckung gemäß den Figuren 4a und 4b;
- Fig. 13: ein Ausführungsbeispiel ebenen Materialzuschnittes zur Bildung einer flexiblen Airbagabdeckung gemäß den Figuren 5a und 5b;
- Fig. 14: ein Ausführungsbeispiel ebenen Materialzuschnittes zur Bildung einer flexiblen Airbagabdeckung gemäß den Figuren 6a und 6b;
- Fig. 15a: ein Kraftfahrzeuglenkrad mit einem Airbagmodul der in Figur 1 gezeigten Art;
- Fig. 15b: eine Abwandlung der Anordnung aus Figur 15a;
- Fig. 16a: eine Abwandlung des Airbagmoduls aus Figur 1 zusammen mit einem Lenkrad, in das das Airbagmodul einzubauen ist;
- Fig. 16b: die Anordnung aus Figur 16a im eingebauten Zustand des Airbagmoduls;
- Fig. 16c: eine Abwandlung der Anordnung aus Figur 16b.

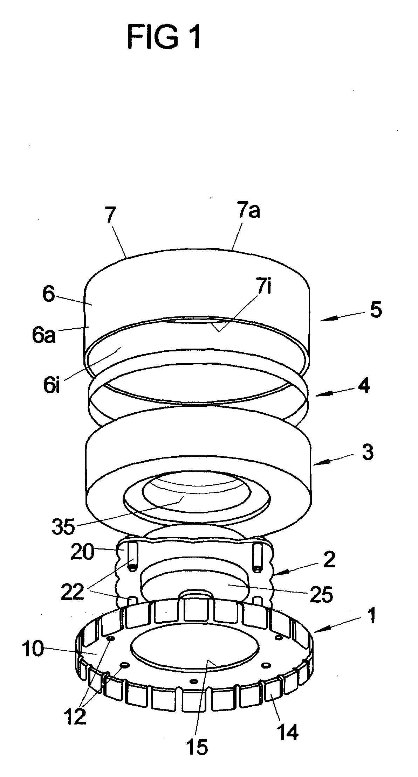

Figur 1 zeigt in perspektivischer Explosionsdarstellung ein Airbagmodul zum Einsatz in einem Kraftfahrzeug umfassend einen Modulträger 1, über die das Airbagmodul in einem Kraftfahrzeug anorden- und festlegbar ist; eine Generatorbaugruppe 2 mit einem Gasgenerator 25 zum Aufblasen eines Gassackes 3 in einem Crash-Fall, um hieraus ein zum Schutz eines Fahrzeuginsassen dienendes Gaskissen zu bilden; sowie eine Airbagabdeckung 5, in der der Gassack 3 in Form eines zusammengestauchten Gassackpaketes sowie vorliegend zumindest Teile der Generatorbaugruppe 2 aufgenommen sind.

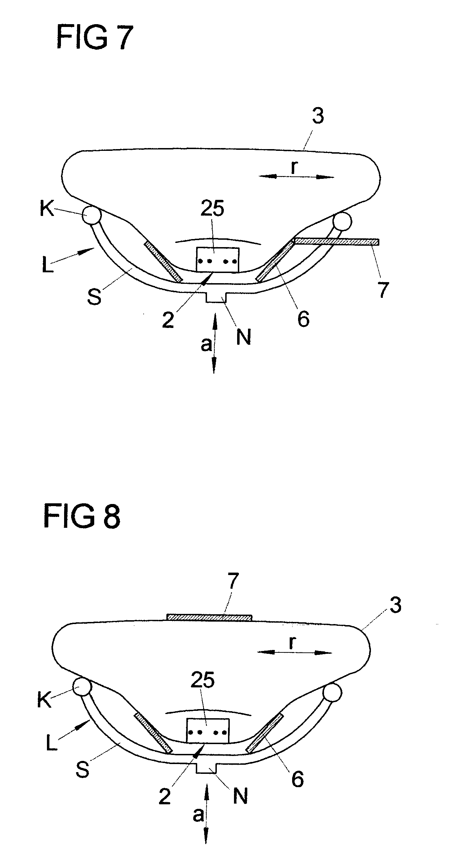

Das in Figur 1 dargestellte Airbagmodul ist ausgebildet zum Einbau in ein Lenkrad eines Kraftfahrzeugs, genauer zum Einbau in einen zentralen Lenkradbereich, in dem die Speichen eines Lenkrades zusammentreffen und in dem auch die so genannte Lenkradnabe angeordnet ist. Dies wird weiter unten anhand der Figuren 7, 8 und 15a noch näher erläutert werden.

Die nachfolgende Erläuterung unterschiedlicher Airbagmodule der in Figur 1 dargestellten Art erfolgt dabei nur beispielhaft anhand von Airbagmodulen, die jeweils zum Einbau in ein Kraftfahrzeuglenkrad eingerichtet sind. Die anhand der Ausführungsbeispiele zu beschreibende Erfindung, die sich insbesondere auf die Ausgestaltung der Airbagabdeckung bezieht, ist auch bei anderen Airbagmodulen anwendbar.

Bei dem in Figur 1 dargestellten Ausführungsbeispiel eines Airbagmoduls wird der Modulträger 1 durch eine (kreisförmige) Halteplatte 10 gebildet und weist einen abgewinkelten äußeren Rand 14 auf, der der Fixierung der Airbagabdeckung 5 am Modulträger 1 dient. Weiterhin ist der Modulträger 1 mit Befestigungsstellen 12, hier in Form von Befestigungsöffnungen, versehen, in die zugeordnete Befestigungselemente 22, hier in Form von Befestigungsbolzen, der Generatorbaugruppe 2 eingreifen können, um die Generatorbaugruppe 2 am Modulträger 1 festzulegen. Die generatorseitigen Befestigungselemente 22 sind dabei an einem Generatorträger 20 angeordnet, der einen Gasgenerator 25 in Form eines Topfgasgenerators aufnimmt.

Wenn die Generatorbaugruppe 2 über die generatorseitigen Befestigungselemente 22 ordnungsgemäß an dem Modulträger 1 über dessen Befestigungsstellen 12 festgelegt ist, indem z. B. die generatorseitigen Befestigungselemente 22 in Form von Befestigungs- bzw. Gewindebolzen in die modulträgerseitigen Befestigungsstellen 12 in Form von Befestigungsöffnungen eingreifen und durch nicht dargestellte Befestigungsmuttern gesichert werden, dann liegt die Generatorbaugruppe 2 mit ihrem Generatorträger 20 an der Halteplatte 10 des Modulträgers 1 an und der Gasgenerator 25 greift in eine hierfür vorgesehene (kreisförmige) Aussparung 15 des Modulträgers 1 ein.

Der mittels des Gasgenerators 25 in einem Crash-Fall aufzublasende Gassack 3 ist für die Integration in das Airbagmodul zu einem Gassackpaket zusammengestaucht, z. B. durch Falten, Raffen oder sonstige geeignete Maßnahmen zum Kompaktieren eines Gassackes 3. Das Gassackpaket liegt dabei in einer Form vor, in der es eine (im Querschnitt im Wesentlichen kreisförmige) Ausnehmung 35 aufweist, in die der Gasgenerator 25 mit einem (mit Gasaustrittsöffnungen versehenen) Generatorabschnitt hineinragt, so dass in einem Crash-Fall vom Gasgenerator 25 freigesetzte Gase unmittelbar in den Gassack 3 eintreten können.

Zur Aufnahme des Gassackes 3 zusammen mit dem Gasgenerator 2 und dem Modulträger 1, so dass diese als Airbagbaugruppe in einem Kraftfahrzeug, hier speziell an einem Kraftfahrzeuglenkrad, angeordnet werden können, dient eine Airbagabdeckung 5, die vorliegend aus einem flexiblen, zugleich dehnbaren Material besteht.

Die Airbagabdeckung 5 umfasst hier einen ringförmig (im Ausführungsbeispiel annähernd kreisringförmig) umlaufenden Mantelabschnitt 6 und einen an einer Stirnseite des Mantelabschnittes 6 vorgesehenen Deckabschnitt 7 auf, so dass Mantelabschnitt 6 und Deckabschnitt 7 zusammen eine im Wesentlichen topfförmige Aufnahme für den Gassack 3 sowie die Generatorbaugruppe 2 und den Modulträger 1 bilden.

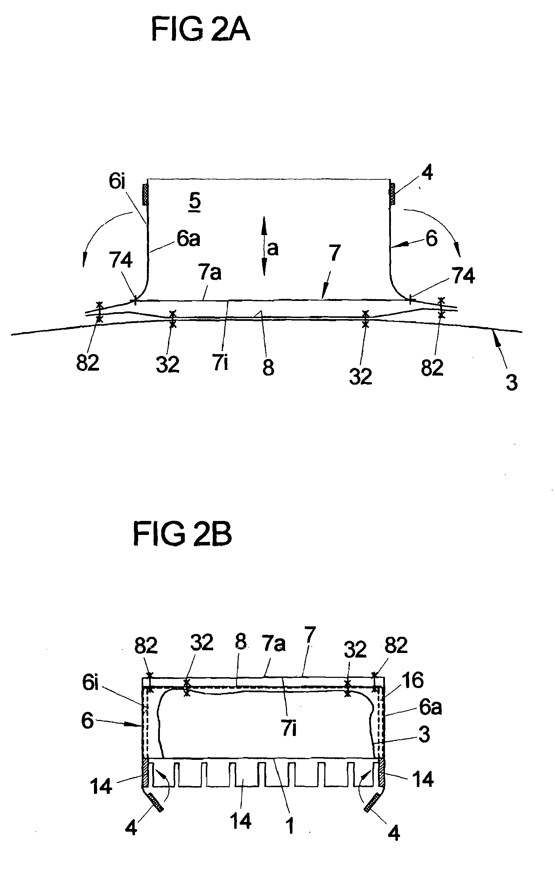

Aufgrund ihrer Flexibilität und Dehnbarkeit kann die Airbagabdeckung 5 in einer weiter unten anhand der Figuren 2a und 2b beschriebenen Art und Weise dadurch bestimmungsgemäß als Aufnahme für den Gassack 3 (sowie die Generatorbaugruppe 2 und den Modulträger 1) bereitgestellt werden, dass die Airbagabdeckung 5 durch Umschlagen über den Gassack 3 (sowie die Generatorbaugruppe 2 und den Modulträger 1) gestülpt wird.

Aufgrund ihrer Flexibilität und Dehnbarkeit kann die Airbagabdeckung 5 weiterhin dazu dienen, zur Komprimierung des Gassackpaketes 3 beizutragen und/oder dieses im zusammengestauchten, insbesondere im komprimierten, Zustand zu halten. Hierzu kann sich der Gassack 3 an der Airbagabdeckung 5, vorliegend am Mantelabschnitt 6 und/oder oder am Deckabschnitt 7, genauer an deren Innenseite 6i bzw. 7i, abstützen. Hierdurch trägt der Gassack 3 zugleich dazu bei, der flexiblen Airbagabdeckung eine Form aufzuprägen bzw. die eingenommene Form der Airbagabdeckung zu stabilisieren.

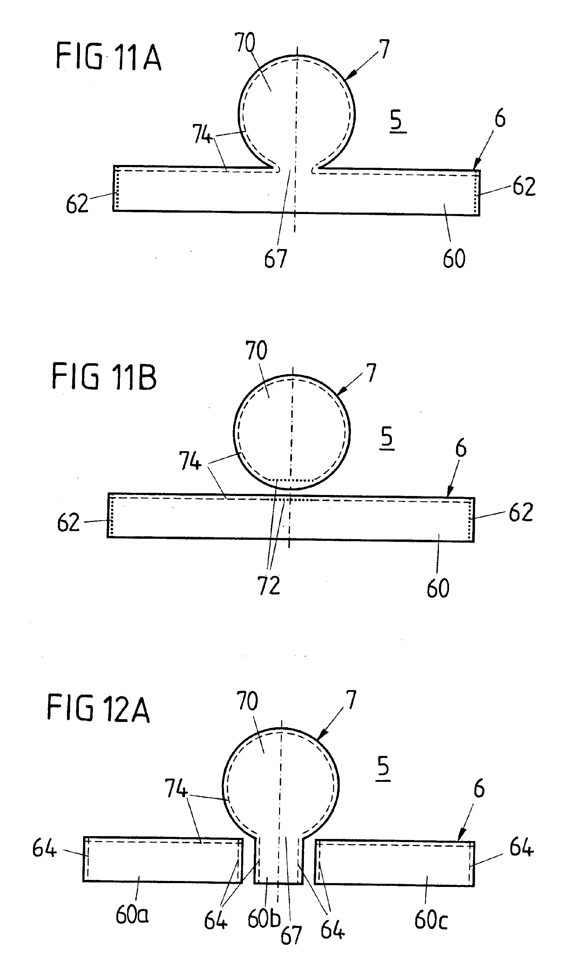

Die flexible Airbagabdeckung 5 kann, wie nachfolgend insbesondere anhand der Figuren 11a bis 14 noch beschrieben werden wird, aus einem oder mehreren (ebenen) Materialzuschnitten bestehen, die gegebenenfalls mit Schaumstoff oder einem sonstigen (weichen) Verkleidungsmaterial kaschiert sind, um Unebenheiten auszugleichen und die Haptik der Airbagabdeckung zu optimieren. Dies gilt insbesondere für solche Abschnitte der Airbagabdeckung, vorliegend z.B. den Deckabschnitt 7, die im bestimmungsgemäß in ein Kraftfahrzeug eingebauten Zustand der Airbagabdeckung bzw. des Airbagmodules eine so genannte Sichtfläche bilden, also im Fahrzeuginnenraum (für einen Fahrzeuginsassen) sichtbar sind.

Zur Bildung der Airbagabdeckung 5 aus einem oder mehreren Materialzuschnitten werden Bereiche jenes mindestens einen Materialzuschnittes über Verbindungsstellen miteinander verbunden, wobei zumindest ein Teil der Verbindungsstellen als beim Aufblasen und Entfalten des Gassackes 3 auftrennbare (aufreißbare) Verbindungsstellen ausgebildet ist, um in der Airbagabdeckung 5 eine Öffnung zu schaffen, durch die hindurch der Gassack 3 sich in Richtung auf einen zu schützenden Fahrzeuginsassen entfalten und ausdehnen kann.

Wegen der Flexibilität und Dehnbarkeit der Airbagabdeckung 5 ist dabei eine begrenzte Ausdehnung des sich in einem Crash-Fall entfaltenden Gassackes 3 auch schon dann möglich, bevor eine Öffnung in der Airbagabdeckung 5 freigegeben worden ist. Dies kann genutzt werden, um den Entfaltungsvorgang des Gassackes 3 gezielt zu optimieren.

Wie anhand einer Zusammenschau der Figuren 1, 2a und 2b deutlich wird, kann die flexible, dehnbare Airbagabdeckung 5 dadurch an dem Modulträger 1 befestigt werden, dass die Airbagabdeckung 5 zunächst in einem in Figur 2a gezeigten umgeschlagenen bzw. umgestülpten Zustand bereitgestellt wird, in dem die Außenwände der umgeschlagenen Airbagabdeckung 5 (also die Außenwände des Mantelabschnittes 6 und des Deckabschnittes 7) durch die Innenwände 6i, 7i der bestimmungsgemäß angeordneten Airbagabdeckung 5 (wie in Figur 1 dargestellt) gebildet werden, während umgekehrt die Innenwände der umgeschlagenen Airbagabdeckung 5 durch die Außenwände 6a, 7a der bestimmungsgemäß angeordneten Airbagabdeckung 5 (wie in Figur 1 dargestellt) gebildet werden.

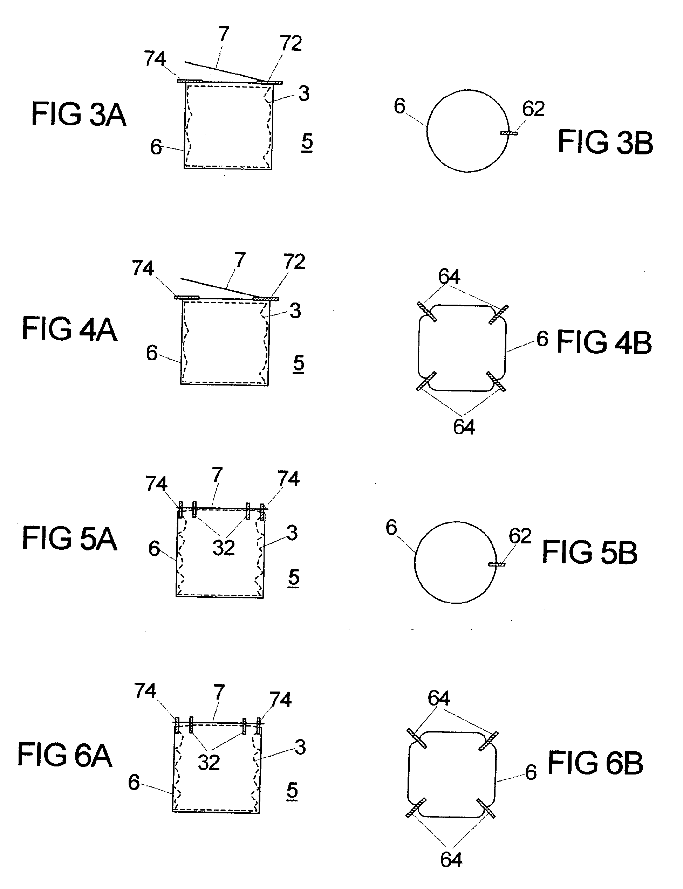

Sofern bei einigen Ausführungsbeispielen, wie z. B. im Fall der Figuren 5a und 5b sowie 6a und 6b vorgesehen ist, den Gassack 3 mit der Airbagabdeckung 5, insbesondere deren Deckabschnitt 7 über geeignete Befestigungsstellen 32, z.B., in Form von Nähten, zu verbinden, so erfolgt dies gemäß Figur 2 vorteilhaft noch im umgeschlagenen Zustand der Airbagabdeckung 5, also bevor diese durch erneutes Umschlagen über den Gassack 3 gestülpt worden ist.

Gemäß Figur 2a ist dabei der Gassack 3 über die Befestigungsstellen 32 nicht unmittelbar an der Airbagabdeckung 5 festgelegt, sondern vielmehr an einer Zwischenlage 8, die wiederum über weitere Befestigungsstellen 82 an der Airbagabdeckung 5, nämlich an deren Deckabschnitt 7, fixiert ist. Die Zwischenlage 8 erstreckt sich somit zwischen dem Deckabschnitt 7 der Airbagabdeckung 5 und dem Gassack 3.

In dem in Figur 2a gezeigten Zustand ist der Gassack zunächst noch nicht zu einem Gassackpaket zusammengestaucht. Dieses Zusammenstauchen erfolgt in dem in den Figuren 2a und 2b dargestellten Ausführungsbeispiel erst nach dem Anbinden des Gassackes 3 an die Modulabdeckung 5 über die Befestigungsstellen 32, die Zwischenlage 8 und die weiteren Befestigungsstellen 82, z. B. durch Falten oder Raffen.

Anhand der Figuren 1, 2a und 2b ist ferner erkennbar, dass die Airbagabdeckung 5 an ihrer dem Deckabschnitt 7 abgewandten (offenen) freien Stirnseite mit Fixiermitteln, hier in Form eines am Mantelabschnitt 6 umlaufenden Befestigungsringes (z.B. bestehend aus Kunststoff) versehen ist, der der Fixierung der Airbagabdeckung 5 am Modulträger 1 dient.

Um den zu einem Gassackpaket zusammengestauchten Gassack 3 in der Airbagabdeckung 5 zu verstauen, wird diese, wie in Figur 2a anhand der dortigen Pfeile angedeutet - unter Ausnutzung von deren Flexibilität und Dehnbarkeit - umgeschlagen und über den zusammengestauchten Gassack 3 gestülpt, wobei die Airbagabdeckung 5, genauer deren Mantelabschnitt 6, eine solche Ausdehnung in axialer Richtung a aufweist, dass - bei Aufbringung einer in Richtung Modulträger 1 wirkenden Kraft - die Airbagabdeckung 5, genauer deren Mantelabschnitt 6, mit dem mit dem Befestigungsring 4 (in Form eines aus Kunststoff bestehenden Bandes) versehenen Ende über den Modulträger 1 und dessen abgewinkelten Randbereich 14 hinausragt, vergl. Figur 2b. Zur Fixierung der Airbagabdeckung 5 am Modulträger 1 wird abschließend das mit dem Befestigungsring 4 versehene freie Ende der Airbagabdeckung 5 bzw. des Mantelabschnittes 6 gemäß Figur 2b noch einmal nach innen umgeschlagen, so dass sich der Befestigungsring 4 vor der inneren Oberfläche des abgewinkelten Randbereiches 14 des Modulträgers 1 erstreckt.

Durch die flächige Fixierung der Airbagabdeckung 5 am Modulträger 1 über den Befestigungsring 4, welcher vorteilhaft durch Nähte oder in sonstiger Weise an der Innenwand der Airbagabdeckung 5 befestigt sein kann, erfolgt in dem Bereich, in dem die Airbagabdeckung 5 und der Modulträger 1 aneinander fixiert sind, eine entsprechend gleichmäßige, flächige Kraftübertragung, so dass an der gesamten Airbagabdeckung 5 weitgehend konstante Spannungsverhältnisse wirken.

Nach Abschluss des Einbringens des Gassackes 3 als Gassackpaket (sowie des Modulträgers 1 und der Generatorbaugruppe 2 in die Airbagabdeckung 5 - durch Umschlagen der Airbagabdeckung 5 - liegen deren Außenwände 6a, 7a wieder außen und deren Innenwände 6i, 7i wieder innen, wie in Figur 1 und 2b erkennbar.

Wie in Figur 2b in gestrichelter Linie schematisch angedeutet ist, kann innerhalb der Airbagabdeckung 5, insbesondere vor dessen Mantelabschnitt 6, optional ein (im Wesentlichen formstabiles, ringförmig umlaufendes) seitliches Wandungsteil 16 vorgesehen sein, welches (als an der oberen Deckfläche offenes Teil) das Gassackpaket (ringförmig) umgibt und welches bis an den Deckabschnitt 7 heranragen kann. Hierdurch kann eine zusätzliche Stabilisierung der äußeren Form der Airbagabdeckung 5 erreicht werden. Ein solches Wandungsteil 16 kann einen integralen (z.B. einstückig angeformten) Bestandteil des Modulträgers 1 bilden oder es kann als ein separates Bauteil vorgesehen sein, welches jedoch (lösbar oder unlösbar) mit dem Modulträger 1 verbunden sein kann.

In den Figuren 3a bis 6b sind schematisch unterschiedliche Ausführungsformen einer Airbagabdeckung 5 dargestellt, und zwar jeweils in den Figuren 3a, 4a, 5a und 6a in einer Seitenansicht, wobei der in der Airbagabdeckung 5 jeweils aufgenommene Gassack 3 (bzw. genauer der Umriss des jeweiligen Gassackpaketes) gestrichelt angedeutet ist, und in den Figuren 3b, 4b, 5b und 6b jeweils in einem Querschnitt durch den Mantel 6 der jeweiligen Airbagabdeckung, wobei der Gassack nicht mit dargestellt wird.

Die beiden Ausführungsbeispiele der Figuren 3a und 3b bzw. 4a und 4b beziehen sich dabei jeweils auf eine Ausführungsform, bei der der Deckabschnitt 7 der jeweiligen Airbagabdeckung 5 in einem Teilbereich jeweils über eine feste, nicht auftrennbare Verbindungsstelle 72, z.B. in Form einer Naht, dauerhaft mit dem Mantelabschnitt 6 der Airbagabdeckung 5 verbunden ist. In weiteren Teilbereichen ist der jeweilige Deckabschnitt 7 demgegenüber über mindestens eine auftrennbare Verbindungsstelle 74, z.B. in Form einer Reißnaht, mit dem Mantelabschnitt 6 verbunden. Dies bedeutet, dass beim Aufblasen und Entfalten eines innerhalb der jeweiligen Airbagabdeckung 5 angeordneten Gassackes 3 die Verbindung zwischen dem Deckabschnitt 7 und dem Mantelabschnitt 6 teilweise, nämlich an den auftrennbaren Verbindungsstellen 74 gelöst wird, und in weiteren Teilen, nämlich an den dauerhaften Verbindungsstellen 72 Bestand hat. Letztere Verbindungsstellen 72 bilden somit ein Scharnier, welches ein Aufklappen des Deckabschnittes 7 der Airbagabdeckung 5 beim Aufblasen und Entfalten des Gassackes 3 ermöglicht, wie in den Figuren 3a und 4a jeweils angedeutet.

Die Ausführungsbeispiele der Figuren 3a, 3b einerseits und 4a, 4b andererseits unterscheiden sich in der Ausgestaltung des jeweiligen Mantelabschnittes 6.

Im Fall der Figuren 3a, 3b ist der Mantelabschnitt 6 so ausgebildet, dass er beim Aufblasen und Entfalten des hierin angeordneten Gassackes 3 als den Gassack 3 umfassender Mantel erhalten bleibt, sich also nicht öffnet. Dabei ist der Mantelabschnitt 6 im Ausführungsbeispiel der Figuren 3a und 3b aus einem einzelnen flexiblen Materialzuschnitt gebildet, der den zugeordneten Gassack 3 ringförmig umgreift und dessen beide freie Endbereiche über dauerhafte Verbindungsstellen 62, hier in Form beim Aufblasen und Entfalten des Gassackes 3 nicht auftrennbarer Nähte, fest miteinander verbunden sind.

Demgegenüber ist beim Ausführungsbeispiel der Figuren 4a und 4b vorgesehen, dass sich der Mantelabschnitt 6 beim Aufblasen und Entfalten des in der Airbagabdeckung 5 vorgesehenen Gassackes 3 öffnen kann, wozu am Mantelabschnitt entsprechende auftrennbare Verbindungsstellen 64, hier in Form von Reißnähten, vorgesehen sind. Der Mantelabschnitt 6 besteht dabei im Ausführungsbeispiel der Figuren 4a und 4b aus mehreren (vier) flexiblen Materialzuschnitten, die an ihren Endbereichen jeweils über auftrennbare Verbindungsstellen 64 miteinander verbunden sind.

Selbstverständlich können zur Bildung eines jeweiligen Mantelabschnittes 6, in Abwandlung der Figuren 3a, 3b; 4a, 4b auch jeweils dauerhafte und auftrennbare Verbindungsstellen 62, 64 miteinander kombiniert werden; und es kann auch ein öffnender Mantelabschnitt 6 aus nur einem in eine Ringform gelegten Materialzuschnitt gebildet werden, indem dieser an seinen (beiden) freien Endbereichen über auftrennbare Verbindungsstellen (in Form einer Reißnaht) geschlossen wird.

Bei den Ausführungsbeispielen der Figuren 5a, 5b sowie 6a, 6b ist - im Unterschied zu den Ausführungsbeispielen der Figuren 3a bis 4b - der Deckabschnitt 7 der jeweiligen Airbagabdeckung 5 ausschließlich lösbar mit dem zugeordneten Mantelabschnitt 6 verbunden, und zwar über auftrennbare Verbindungsstellen 74, hier in Form von Reißnähten, so dass der jeweilige Deckabschnitt 7 beim Aufblasen und Entfalten des in der jeweiligen Airbagabdeckung 5 angeordneten Gassackes 3 vollständig von dem zugehörigen Mantelabschnitt 6 gelöst wird. Um dabei eine unkontrollierte Bewegung des jeweiligen Deckabschnittes 7 nach dem Lösen vom zugehörigen Mantelabschnitt 6 zu verhindern, ist der jeweilige Deckabschnitt 7 über Befestigungsstellen 32 (direkt oder indirekt über eine Zwischenlage) dauerhaft mit einem Abschnitt des zugeordneten Gassackes 3 verbunden.

Die Ausführungsbeispiele der Figuren 5a, 5b einerseits und 6a, 6b andererseits unterscheiden sich dabei - ebenso wie die Ausführungsbeispiele der Figuren 3a, 3b und 4a, 4b - in der Ausgestaltung des jeweiligen Mantelabschnittes 6.

Im Fall des Ausführungsbeispiels der Figuren 5a, 5b ist - ebenso wie im Fall des Ausführungsbeispiels der Figuren 3a, 3b - ein beim Aufblasen und Entfalten des zugeordneten Gassackes 3 nicht öffnender Mantelabschnitt 6 vorgesehen. Bei dem Ausführungsbeispiel der Figuren 6a, 6b ist demgegenüber - insoweit in Übereinstimmung mit dem Ausführungsbeispiel der Figuren 4a und 4b - ein beim Aufblasen und Entfalten des Gassackes 3 öffnender Mantelabschnitt 5 als den Gassack 3 umgreifendes Mantelteil vorhanden.

Figur 7 zeigt eine schematische Querschnittsdarstellung einer Airbagabdeckung gemäß den Figuren 3a und 3b eingebaut in ein Kraftfahrzeuglenkrad L mit einer Nabe N, hiervon abgehenden Speichen S und einem mit den Speichen S verbundenen, ringförmigen Lenkradkranz K, wobei weiterhin auch ein im zentralen Lenkradbereich oberhalb der Nabe N angeordneter Gasgenerator 25 zum Aufblasen eines in der Airbagabdeckung 5 angeordneten Gassackes 3 vorgesehen ist.

In der Darstellung der Figur 7 ist der Gassack 3 bereits weitgehend aufgeblasen und entfaltet, so dass sich die Airbagabdeckung 5 durch Umklappen des Deckabschnittes 7 bezüglich des Mantelabschnittes 6 geöffnet hat, um eine Öffnung für den sich entfaltenden Gassack 3 freizugeben.

Der Mantelabschnitt 6 ist demgegenüber im Ausführungsbeispiel der Figur 7 nicht öffnend ausgebildet, so dass er auch nach dem Aufblasen und Entfalten des Gassackes 3 als ringförmiges Mantelteil erhalten bleibt, wobei er allerdings aufgrund seiner Flexibilität und Dehnbarkeit beim Aufblasen und Entfalten des Gassackes 3 deformiert wird, wie anhand Figur 7 erkennbar. Hierdurch kann eine seitliche Entfaltung des Gassackes 3 in radialer Richtung r, also senkrecht zur parallel zur Lenkradachse erstreckten axialen Richtung a, gefördert werden. Somit wird beim Aufblasen und Entfalten des Gassackes 3 zusätzlich zu dessen Ausdehnung entlang der axialen Hauptentfaltungsrichtung a auch die zusätzliche Ausdehnung des Gassackes 3 in der hierzu senkrechten radialen Richtung r unterstützt.

In einer Abwandlung der Anordnung aus Figur 7 kann - unter Verwendung einer Airbagabdeckung 5, wie in den Figuren 4a und 4b dargestellt - vorgesehen sein, dass der Mantelabschnitt 6 der Airbagabdeckung sich beim Aufblasen und Entfalten des Gassackes 3 öffnet. Hierzu sind am Mantelabschnitt 6 entsprechende auftrennbare Verbindungsstellen 64 (Reißnähte) vorzusehen, wie in Figur 4b gezeigt. Hierdurch wird ein radiales Entfalten des Gassackes 3 beim Aufblasen mittels des Gasgenerators 25 noch zusätzlich befördert.

Figur 8 zeigt, entsprechend der Darstellung der Figur 7, wiederum eine Airbagabdeckung zusammen mit einem Kraftfahrzeuglenkrad L und einem Gasgenerator 25 zum Aufblasen eines in der Airbagabdeckung vorgesehenen Gassackes 3, und zwar in einem Zustand, nach dem der Gassack 3 bereits in größerem Umfang aufgeblasen worden ist und sich dementsprechend entfaltet hat.

Abweichend von der Anordnung der Figur 7 basiert die Anordnung der Figur 8 auf einer Airbagabdeckung 5 der in den Figuren 5a und 5b dargestellten Art, also mit einem Deckabschnitt 7, der sich beim Aufblasen und Entfalten des Gassackes 3 vollständig von dem Mantelabschnitt 6 der Airbagabdeckung löst und - über entsprechende Befestigungsstellen 32, wie in Figur 5a dargestellt - dauerhaft mit dem Gassack 3 verbunden bleibt, insbesondere mit einem Gassackabschnitt, der sich beim Aufblasen und Entfalten in Richtung auf den zu schützenden Fahrzeuginsassen bewegt. Aufgrund der Verwendung eines flexiblen, weichen Materials für den Deckabschnitt 7 der Airbagabdeckung ist hiermit keine Gefahr für den zu schützenden Fahrzeuginsassen verbunden. Vielmehr kann durch die Verwendung geeigneter Materialien für den Deckabschnitt 7 die Schutzwirkung des Gassackes 3 sogar noch optimiert werden.

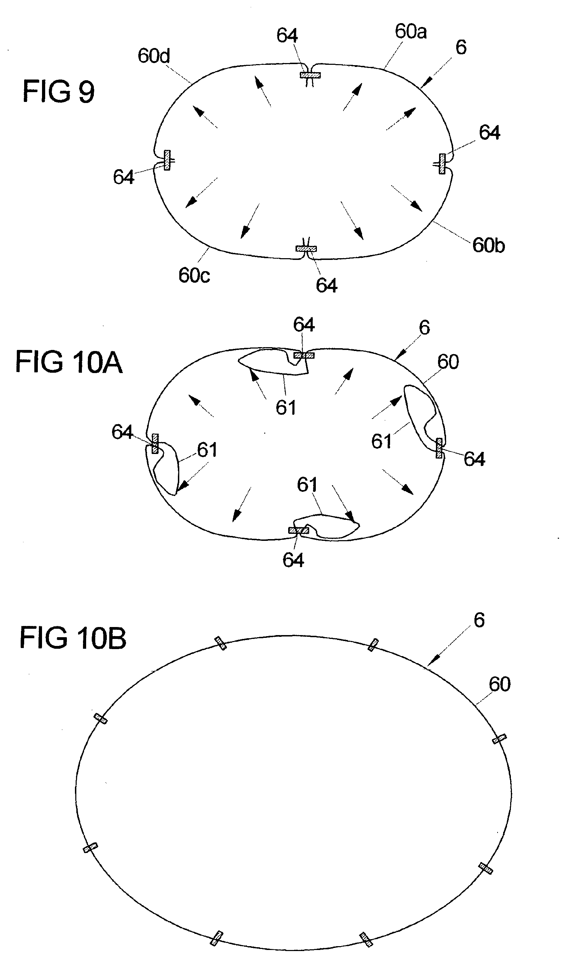

Wie auch im Fall der Anordnung aus Figur 7 kann ebenso bei der Anordnung der Figur 8 in einer Abwandlung vorgesehen sein, dass der Mantelabschnitt 6 sich beim Aufblasen und Entfalten des Gassackes 3 öffnet, nämlich durch Verwendung auftrennbarer Verbindungsstellen 64 am Mantelabschnitt 6, wie in Figur 6b dargestellt. Figur 9 zeigt in einem Querschnitt, ausgehend von einem Mantelabschnitt 6 der in den Figuren 4b und 6b schematisch dargestellten Art, der aus vier Materialzuschnitten 60a, 60b, 60c, 60d besteht, welche an ihren freien Endbereichen jeweils über auftrennbare Verbindungsstellen 64 (in Form von Reißnähten) miteinander verbunden sind, dass unter der Druckwirkung des sich entfaltenden Gassackes, in Figur 9 repräsentiert durch entsprechende Pfeile, der Mantelabschnitt 6 aufgrund seiner Flexibilität und Dehnbarkeit zunächst verformt wird, bevor die Verbindungsstellen 64 aufgetrennt werden. Diese Eigenschaften eines flexiblen, dehnbaren Mantelabschnittes können gezielt genutzt werden, um das Aufblasverhalten eines von dem Mantelabschnitt 6 ringförmig umschlossenen Gassackes zu optimieren.

In Figur 10a ist eine Abwandlung des Mantelabschnittes 6 aus Figur 9 dargestellt, gemäß der der Mantelabschnitt 6 einer Airbagabdeckung abschnittsweise in Schlaufen 61 gelegt ist, die jeweils durch auftrennbare Verbindungsstellen 64, hier in Form von Reißnähten, fixiert sind. Unter der Druckwirkung eines sich entfaltenden Gassackes, in Figur 10a wiederum repräsentiert durch nach außen weisende Pfeile, werden die Verbindungsstellen 64 am Mantelabschnitt 6 aufgetrennt und die (ein Materialreservoir bildenden) Schlaufen 61 gehen über in einen Bestandteil der Mantelfläche des Mantelabschnittes 6, wie in Figur 10b gezeigt. Dies führt zu einer entsprechenden Vergrößerung des vom Mantelabschnitt 6 umschlossenen Raumes und erlaubt dementsprechend eine größere Ausdehnung eines hierin angeordneten Gassackes in radialer Richtung.

Bei dem anhand der Figuren 10a und 10b gezeigten Ausführungsbeispiel ist der Mantelabschnitt 6 gebildet durch einen - schematisch im Querschnitt dargestellten - einteiligen flexiblen Materialzuschnitt 60. Die Schlaufen 61 können aber ebenso bei Mantelabschnitten 6 zur Anwendung kommen, die aus mehreren, miteinander verbundenen Materialzuschnitten bestehen.

In den nachfolgend erläuterten Figuren 11a, 11b, 12a, 12b, 13 und 14 sind unterschiedliche Varianten ebener Materialzuschnitte dargestellt, aus denen jeweils eine flexible Airbagabdeckung 5 gebildet werden kann.

Die entsprechenden Materialzuschnitte bestehen dabei jeweils aus einem flexiblen Material, insbesondere einem Textilmaterial, einem hinreichend flexiblen Kunststoff (z. B. in Form einer Kunststofffolie), einem hinreichend weichen Leder oder Kunstleder oder vergleichbaren flexiblen Materialien, die zudem vorteilhaft noch dehnbar sind und die an das Innenraumdesign eines Kraftfahrzeugs anpassbar sind.

Sofern dabei gemäß den Figuren 11b, 12a, 12b, 13 und 14 für die Herstellung einer Airbagabdeckung mehrere, separate Materialzuschnitte verwendet werden, können diese auch aus unterschiedlichen Materialien bestehen.

Zur Verbindung der Materialzuschnitte, um hieraus jeweils eine Airbagabdeckung zu bilden, können neben den bereits mehrfach erwähnten Nähten auch andere Verbindungsarten, wie z. B. Schweißen oder Kleben, verwendet werden.

Dabei bezeichnen in den Figuren 11a bis 14 die Bezugszeichen 62, 72 jeweils dauerhafte, feste Verbindungsstellen zwischen Bereichen der jeweiligen Materialzuschnitte, die beim Aufblasen und Entfalten eines innerhalb der jeweiligen Airbagabdeckung angeordneten Gassackes nicht aufgetrennt werden. Die Bezugszeichen 64, 74 beziehen sich demgegenüber auf auftrennbare (aufreißbare) Verbindungen zwischen Bereichen eines oder mehrerer Materialzuschnitte, die unter dem Druck eines sich in der jeweiligen Airbagabdeckung entfaltenden Gassackes aufgetrennt werden, um eine Öffnung für den entsprechenden Gassack freizugeben.

Im Ausführungsbeispiel der Figur 11a ist ein einzelner, einteiliger ebener Materialzuschnitt zur Bildung einer Airbagabdeckung 5 vorgesehen, umfassend einen ersten Materialzuschnittsbereich 60 zur Bildung eines Mantelabschnittes 6 und einen zweiten Materialzuschnittsbereich 70 zur Bildung eines Deckabschnittes 7 der Airbagabdeckung 5, wobei die beiden Materialzuschnittsbereiche 60, 70 einstückig über einen entsprechenden Verbindungsbereich 67 miteinander verbunden sind. Der Verbindungsbereich 67 bildet zugleich einen Scharnierbereich, um den der Deckabschnitt 7 beim Aufblasen und Entfalten eines Gassackes aufklappbar ist.

Zur Bildung einer Airbagabdeckung 5 aus dem in Figur 11a gezeigten Materialzuschnitt wird der den Mantelabschnitt 6 bildende Materialzuschnittsbereich 60 in eine Ringform gelegt, und die freien Endbereiche jenes Materialzuschnittsbereiches 60 werden über dauerhafte Verbindungsstellen 62 miteinander verbunden. Anschließend wird der den Deckabschnitt 7 bildende Materialzuschnittsbereich 70 - außerhalb des Verbindungsbereiches 67 - über auftrennbare Verbindungsstellen 74 mit einer Stirnseite des Mantelabschnittes 6 verbunden.

Figur 11b zeigt eine Abwandlung des Materialzuschnittes aus Figur 11a, gemäß der der Mantelabschnitt 6 und der Deckabschnitt 7 der Airbagabdeckung 5 jeweils durch einen separaten Materialzuschnitt 60 bzw. 70 gebildet werden, die jedoch - zur Bildung eines Scharniers - über dauerhafte, feste Verbindungsstellen 72 miteinander verbunden sind.

Im Ergebnis gelangt man sowohl mit einer Anordnung der in Figur 11a dargestellten Art als auch mit einer Anordnung der in Figur 11b dargestellten Art jeweils zu einer in den Figuren 3a und 3b gezeigten Airbagabdeckung 5 mit einem beim Aufblasen und Entfalten des jeweiligen Gassackes 3 nicht öffnenden Mantelabschnitt 6 und einem aufklappbaren Deckabschnitt 7.

Figur 12a zeigt eine Abwandlung der Anordnung aus Figur 11a, gemäß der der Mantelabschnitt 6 durch mehrere Materialzuschnitte 60a, 60b, 60c, zum Beispiel drei Materialzuschnitte, gebildet wird, die jeweils durch auftrennbare Verbindungsstellen 64 miteinander verbunden sind, wobei einer der den Mantelabschnitt 6 bildenden Materialzuschnitte (60b) über einen Verbindungsbereich 67 einstückig mit einem den Deckabschnitt 7 bildenden Materialzuschnitt 70 verbunden ist, während die anderen den Mantelabschnitt 6 bildenden Materialzuschnitte 60a, 60c jeweils über auftrennbare Verbindungsstellen 74 mit dem den Deckabschnitt 7 bildenden Materialzuschnitt 70 verbunden sind.

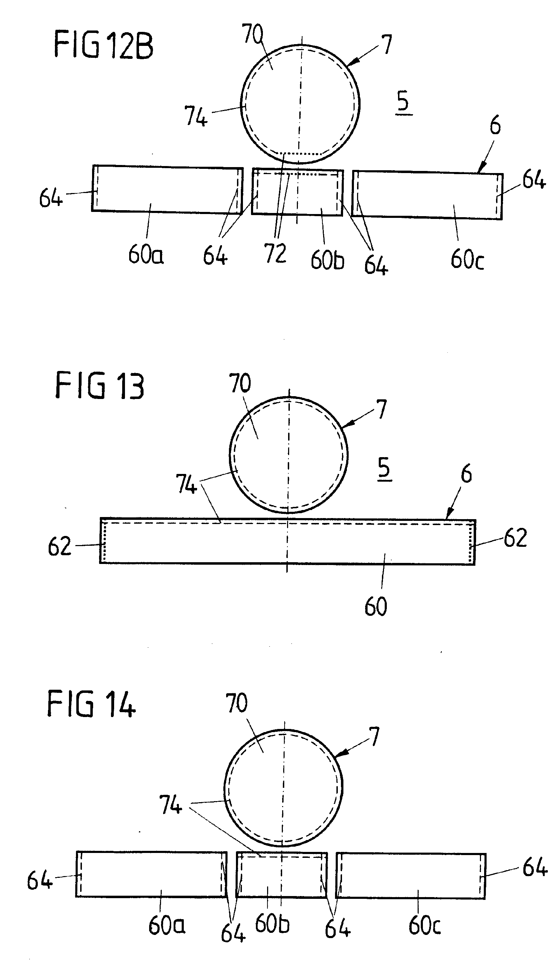

Figur 12b zeigt eine Abwandlung der Anordnung aus Figur 11b, gemäß der der Mantelabschnitt 6 aus mehreren Materialzuschnitten 60a, 60b, 60c gebildet wird, von denen einer (60b) über eine entsprechend feste Verbindungsstelle 72 dauerhaft mit dem den Deckabschnitt 7 bildenden Materialzuschnitt 70 verbunden ist und die anderen (60a, 60c) lediglich über auftrennbare Verbindungsstellen 74 hiermit verbunden sind.

Sowohl mit der Anordnung der Figur 12a als auch mit der Anordnung der Figur 12b wird jeweils eine Airbagabdeckung der in den Figuren 4a und 4b dargestellten Art gebildet, die einen sich beim Aufblasen und Entfalten eines Gassackes 3 öffnenden Mantelabschnitt 6 und einen aufklappbaren Deckabschnitt 7 umfasst.

Figur 13 zeigt eine Abwandlung der Anordnung aus Figur 11b, gemäß der ein einteiliger, einen Deckabschnitt 7 einer Airbagabdeckung 5 bildender Materialzuschnitt 70 ausschließlich über auftrennbare Verbindungsstellen 74 mit einer Stirnseite eines einen Mantelabschnitt 6 der Airbagabdeckung 5 bildenden Materialzuschnittes 60 verbunden wird. Dies führt zu einer Airbagabdeckung der in den Figuren 5a und 5b gezeigten Art, deren Mantelabschnitt 6 beim Aufblasen und Entfalten eines in der Airbagabdeckung 5 angeordneten Gassackes 3 geschlossen bleibt, während sich der Deckabschnitt 7 vollständig von dem Mantelabschnitt 6 trennt.

Figur 14 zeigt schließlich eine Abwandlung der Anordnung aus Figur 13 mit einem Mantelabschnitt 6, der aus mehreren, separaten Materialzuschnitten 60a, 60b, 60c besteht, welche jeweils über auftrennbare Verbindungsstellen 64 an ihren Endbereichen miteinander verbunden sind. Hiermit lässt sich eine Airbagabdeckung der in den Figuren 6a und 6b gezeigten Art realisieren, bei der sich beim Aufblasen und Entfalten eines hierin angeordneten Gassackes 3 sowohl der Mantelabschnitt 6 - durch Auftrennen der Verbindungsstellen 64 - öffnet als auch der Deckabschnitt 7 vollständig vom Mantelabschnitt 6 gelöst wird.

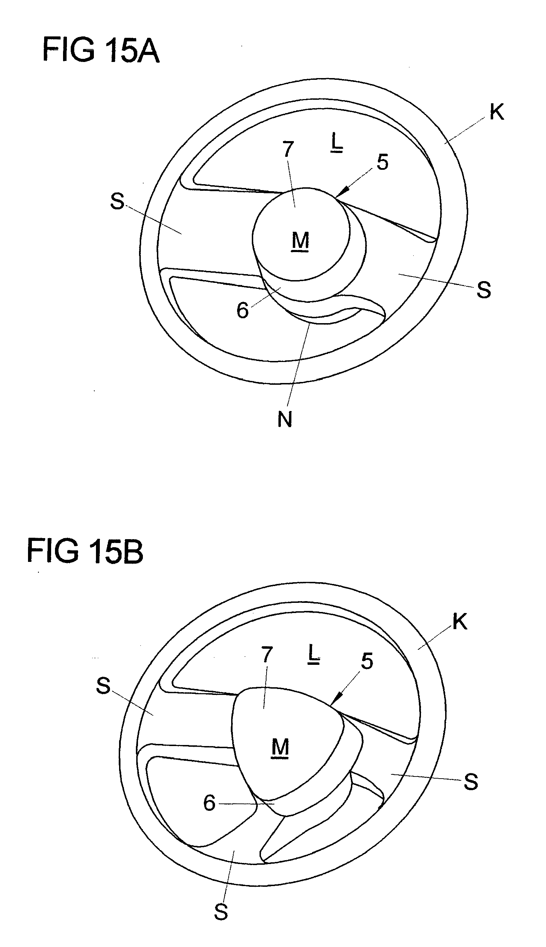

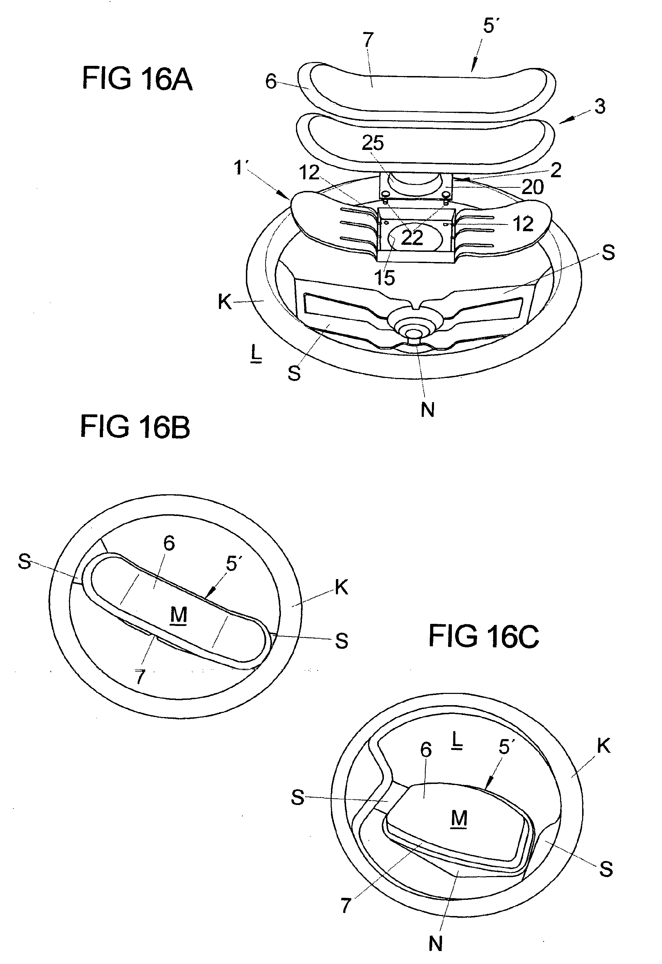

Wie anhand der Figuren 15a, 15b, 16a und 16b erkennbar, lässt sich eine flexible Airbagabdeckung der vorstehend anhand verschiedener Prinzipdarstellungen erläuterten Art in unterschiedlichen Geometrien herstellen und dementsprechend bei unterschiedlichen Airbagmodulen einsetzen.

Figur 15a zeigt eine im Wesentlichen hohlzylindrische Airbagabdeckung 5 - der anhand Figur 1 beschriebenen Art - mit einem Mantelabschnitt 6 und einem stirnseitig angeordneten Deckabschnitt 7, die an einem zweispeichigen Kraftfahrzeuglenkrad L im zentralen Bereich oberhalb der Lenkradnabe N angeordnet ist und ein im zentralen Lenkradbereich vorgesehenes Airbagmodul M aufnimmt, also insbesondere einen Gassack sowie einen Gasgenerator zum Aufblasen des Gassackes.

Ein solches Airbagmodul M kann beispielsweise über eine Schnapp- bzw. Rastverbindung am Skelett des Kraftfahrtzeuglenkrades L angeordnet werden und dabei derart verschieblich am Lenkradskelett gelagert sein, dass sich durch Krafteinwirkung auf das Airbagmodul M eine Hupenfunktion auslösen lässt.

An der flexiblen Airbagabdeckung 5, insbesondere deren Deckabschnitt 7, kann ein Logo angeordnet sein, das auf den Hersteller eines Kraftfahrzeugs, in dem das Airbagmodul M angeordnet ist, und/oder auf den Hersteller des Airbagmoduls M hinweist. Ein solches Logo kann dabei beispielsweise in das Material der Airbagabdeckung 5 integriert (z.B. aufgedruckt, eingewebt, eingeprägt) sein oder als ein separates (aus einem weichen, elastischen oder flexiblen Material bestehendes) Teil an der Airbagabdeckung 5 festgelegt sein oder als ein Logofähnchen, beispielsweise eingenäht im Bereich einer festen Verbindungsstelle 62 am Mantelabschnitt 6, von der Airbagabdeckung 5 abstehen.

Gemäß Figur 15b ist in einer Abwandlung der Anordnung aus Figur 15a bei einem dreispeichigen Kraftfahrzeuglenkrad vorteilhaft ein im Querschnitt im Wesentlichen dreieckiges Airbagmodul M mit einer entsprechenden flexiblen Airbagabdeckung 5 vorgesehen, wobei jeweils eine der Ecken einer der drei Speichen S zugeordnet ist.

Die Figuren 16a und 16b zeigen in einer Explosionsdarstellung sowie einer perspektivischen Darstellung eine hinsichtlich der geometrisch-konstruktiven Ausgestaltung abgewandelte Ausführungsform der Anordnung aus den Figuren 1 und 15a, wobei der wesentliche Unterschied in der geometrischen Ausgestaltung des Modulträgers 1' und der Modulabdeckung 5' liegt. Diese sind nämlich in der Anordnung der Figuren 16a und 16b (entlang einer vom Lenkradkranz K aufgespannten Ebene) derart länglich ausgestaltet, dass sie die beiden Speichen S eines zweispeichigen Kraftfahrzeuglenkrades L im Wesentlichen vollständig überdecken, wie insbesondere anhand einer Zusammenschau der Figuren 16a und 16b deutlich wird.

Im Einzelnen ist in den Figuren 16a und 16b ein Kraftfahrzeuglenkrad L mit einem ringförmig umlaufenden Lenkradkranz K und einer im zentralen Lenkradbereich vorgesehenen Nabe N dargestellt, die über zwei Lenkradspeichen S mit dem Lenkradkranz K verbunden ist.

Die unmittelbar in das Lenkrad L integrierten Lenkradspeichen S bilden dabei einen Bestandteil des Lenkradskelettes und weisen keine eigenständige Umhüllung bzw. Verkleidung auf; denn diese Funktion wird im Ausführungsbeispiel der Figuren 16a und 16b vom Airbagmodul M und insbesondere dessen Airbagabdeckung 5 übernommen. Hierzu ist zum einen der Modulträger 1' des Airbagmoduls M derart längserstreckt ausgebildet, dass er das Skelett der beiden Speichen S des Lenkrades L - auf der einem Fahrer zugewandten Oberseite des Lenkrades L - im Wesentlichen vollständig überdeckt. Der Modulträger 1' ist wiederum einerseits mit Befestigungsstellen 12 in Form von Befestigungsöffnungen versehen, die der Befestigung einer Generatorbaugruppe 2 über generatorseitige Befestigungselemente 22 in Form von Befestigungsbolzen dienen, welche in die Befestigungsöffnungen eingreifen, und weist andererseits eine Aufnahmeöffnung 15 für einen Teil des (topfförmigen) Gasgenerators 25 einer Generatorbaugruppe 2 auf.

Jene generatorseitigen Befestigungselemente 22, die im Ausführungsbeispiel von einem Generatorträger 20 abstehen, können gleichzeitig auch zur Befestigung des Airbagmoduls M am zentralen Lenkradbereich dienen, indem dort entsprechende, zugeordnete Befestigungsstellen, zum Beispiel in Form von Durchgangsöffnungen vorgesehen sind, in die die generatorseitigen Befestigungselemente in Form von Gewindebolzenbolzen eingreifen und durch nicht dargestellte Befestigungsmuttern gesichert werden. Der Modulträger 1', dessen Befestigungsstellen 12 in Form von Befestigungsöffnungen von den generatorseitigen Befestigungselementen 22 in Form von Befestigungsbolzen durchgriffen werden, ist dann zwischen dem Generatorträger 20 und dem zentralen Lenkradbereich (oberhalb der Nabe N) eingeklemmt.

Der Gassack 3 des Airbagmoduls ist im Ausführungsbeispiel der Figuren 16a und 16b derart zu einem längserstreckten Gassackpaket zusammengestaucht, dass das Gassackpaket in seiner äußeren Begrenzung an die längserstreckte Form des Modulträgers 1' angepasst ist.

Zur Abdeckung der aus dem Modulträger 1', der Generatorbaugruppe 2 und dem Gassack 3 bestehenden Airbagbaugruppe dient gemäß den Figuren 16a und 16b eine flexible Airbagabdeckung 5' mit einem ringförmig umlaufenden Mantelabschnitt 6 und mit einem die einem Fahrzeuginsassen zugewandte Stirnseite des Mantelabschnittes 6 verschließenden Deckabschnitt 7, wobei die Airbagabdeckung 5' derart ausgestaltet ist, dass sie bei bestimmungsgemäßem Einbau des Airbagmoduls in ein Kraftfahrzeug, wie in Figur 16b dargestellt, nicht nur den Gassack 3 und die Generatorbaugruppe 2 sondern auch den Modulträger 1' und die Lenkradspeichen S überdeckt, so dass letztere für einen vor dem Lenkrad sitzenden Fahrer nicht sichtbar sind. Figur 16c zeigt eine Abwandlung des Ausführungsbeispieles aus den Figuren 16a und 16b hinsichtlich der konkreten Ausgestaltung der Airbagabdeckung 5', welche auch im Ausführungsbeispiel der Figur 16c derart längserstreckt ausgebildet ist, dass sie die Speichen S eines Kraftfahrzeuglenkrades L im Wesentlichen überdeckt, wobei jedoch bei der Airbagabdeckung 5' der Figur 16c - im Unterschied zur Airbagabdeckung der Figuren 16a und 16b - keine Symmetrie bezüglich der Längserstreckungsrichtung (Längsachse) vorgesehen ist.

Die Verwendung flexibler und gegebenenfalls dehnbarer (weicher) Materialien für eine Airbagabdeckung eröffnet dabei neue Möglichkeiten zur Vermeidung sichtbarer Spalte zur Kraftfahrzeugumgebung, zum Beispiel zu einem Lenkrad im Fall eines Fahrerairbagmoduls, und ermöglicht weiterhin eine für den Fahrer nicht sichtbare Ausgestaltung von Aufreißlinien in der Airbagabdeckung, entlang der diese beim Aufblasen und Entfalten eines Gassackes aufreißt, um eine Öffnung für den sich ausdehnenden Gassack freizugeben.

Darüber hinaus ist eine aus leichtem, flexiblem Material bestehende Airbagabdeckung unter geringerem Druckaufwand zu öffnen, was die Anforderungen an den verwendeten Gasgenerator reduziert, und die verwendeten Materialien können gezielt so ausgewählt werden, dass sie in ihrem Verhalten möglichst geringe Schwankungen bei besonders niedrigen oder besonders hohen Temperaturen zeigen.

Die vorhergehend dargestellten Ausführungsbeispiele einer Airbagabdeckung zeichnen sich jeweils dadurch aus, dass die jeweilige Airbagabdeckung aus einem oder mehreren flexiblen Materialzuschnitten besteht, die entlang bestimmter Materialbereiche, insbesondere entlang der Randbereiche, zur Bildung einer flexiblen Abdeckung miteinander verbunden sind, wobei die Verbindungsstellen hinsichtlich ihrer Festigkeit derart ausgelegt sind, dass bei einem Aufblasen und Entfalten eines Gassackes des Airbagmoduls zumindest ein Teil der Verbindungen aufgetrennt (gelöst) wird, um eine Öffnung für den sich beim Aufblasen entfaltenden Gassack freizugeben.

Bei mehrteiligen Materialzuschnitten können für die einzelnen Materialzuschnitte, die gemeinsam eine Airbagabdeckung bilden, unterschiedliche Materialien verwendet werden, die jeweils an die Funktion des jeweiligen Abschnittes der Airbagabdeckung angepasst sind. So kann etwa für einen im Sichtbereich liegenden Deckabschnitt einer Airbagabdeckung im Hinblick auf das Dekor und weitere Materialeigenschaften ein anderes Material verwendet werden als für einen Mantelabschnitt (Mantelteil) einer Airbagabdeckung.

Die flexible Airbagabdeckung soll dabei bevorzugt jeweils die äußerste Abdeckung des Airbagmoduls bilden; das heißt, es ist keine zusätzliche das Airbagmodul umgebende Kappe vorgesehen, in welchem Fall die flexible Airbagabdeckung lediglich eine Zwischenlage zwischen jener Kappe und dem jeweiligen Gassack bildete. Vielmehr soll die flexible Airbagabdeckung vorteilhaft eine äußere Abdeckung des jeweiligen Airbagmoduls bilden, welche bei einer Vielzahl Modultypen, wie zum Beispiel Fahrerund Beifahrermodulen, zumindest abschnittsweise, nämlich zumindest in ihrem Deckabschnitt, für die Fahrzeuginsassen sichtbar ist. Es handelt sich hierbei also (insbesondere zumindest im Fall des Deckabschnittes) um Sichtflächen, die im Fahrzeuginnenraum eines Kraftfahrzeugs bestimmungsgemäß sichtbar sind.

Zur Herstellung einer derartigen Airbagabdeckung werden zunächst entsprechende (ebene) Materialzuschnitte gefertigt, die anschließend zur Schaffung der Airbagabdeckung miteinander verbunden und zur späteren Festlegung der Airbagabdeckung an einem Modulträger mit entsprechenden Fixiermitteln versehen werden. Dabei kann die Anbringung der Fixiermittel an den mindestens einen Materialzuschnitt - in Abweichung von der vorstehend angegebenen Reihenfolge - auch vor dem Verbinden der Materialzuschnitte erfolgen.

In einer Weiterbildung kann in einem zusätzlichen Verfahrensschritt zumindest ein Teil eines jeweiligen Materialzuschnittes, zum Beispiel ein den Deckabschnitt einer Airbagabdeckung bildender Materialzuschnitt (durch Einwirkung von Druck und/oder Temperatur) einer formgebenden Bearbeitung unterzogen werden, so dass - bei Erhaltung der Flexibilität des Materials - eine dreidimensionale Grundform erzeugt wird.

Um einen jeweiligen Gassack, sowie gegebenenfalls weitere Komponenten eines Airbagmoduls, wie zum Beispiel eine Generatorbaugruppe und/oder einen Modulträger, in der Airbagabdeckung zu verstauen, wird die flexible Airbagabdeckung zunächst einmal umgestülpt, so dass die an sich sichtbare Außenwand der Airbagabdeckung nach innen weist und umgekehrt; anschließend kann gegebenenfalls der in der Airbagabdeckung unterzubringende Gassack in einem Teilbereich (zum Beispiel mit seiner Oberplatte), auch über eine Zwischenlage, mit einem Abschnitt der Airbagabdeckung, insbesondere deren Deckabschnitt, verbunden werden.

In einem nächsten Verfahrensschritt wird dann der in der Airbagabdeckung zu verstauende Gassack zusammengestaucht, zum Beispiel durch Falten und/oder Raffen, und sodann die Airbagabdeckung durch Umschlagen nach außen über den zu einem Gassackpaket zusammengestauchten Gassack gestülpt, so dass die Außenwände der flexiblen Airbagabdeckung nun auch wieder nach außen weisen und die Innenwände nach innen.

Abschließend wird die Airbagabdeckung über hierfür vorgesehene Fixiermittel, zum Beispiel in Form eines (ringförmig umlaufenden) Fixierbandes, an einem Halteteil, wie zum Beispiel einem Modulträger oder einer sonstigen Fahrzeugkomponente, festgelegt, wobei die Fixierung vorteilhaft an einer dem Deckabschnitt der Airbagabdeckung (Oberseite) gegenüber liegenden Stirnseite der Airbagabdeckung (Unterseite) erfolgt und wobei durch die Fixierung der flexiblen Airbagabdeckung zugleich auch eine Straffung der Airbagabdeckung erfolgen kann, indem die Fixiermittel geeignet (gleichmäßig) positioniert sind.

Hierdurch lässt sich die Fixierung der Airbagabdeckung an einem zugeordneten Halteteil insbesondere so auslegen, dass die Spannkräfte der Airbagabdeckung aufgenommen werden, ohne dass sich die Airbagabdeckung wieder löst. Dies ist insbesondere dann von Bedeutung, wenn die Airbagabdeckung zunächst, im Rahmen einer Vormontage des Airbagmoduls, an einem Modulträger vormontiert wird, um dann gemeinsam mit dem Modulträger als ein vorgefertigtes Airbagmodul in ein Kraftfahrzeug eingebaut zu werden. Erst bei Anordnung des Airbagmoduls in einem Kraftfahrzeug muss die abschließende, resultierende Fixierung der Airbagabdeckung so ausgelegt sein, dass die beim bestimmungsgemäßen Aufblasen und Entfalten eines Gassackes in einem Crash-Fall auf die Airbagabdeckung wirkenden Kräfte nicht zu einem ungewollten Ablösen der flexiblen Airbagabdeckung von dem oder den zugeordneten Halteteilen führen.

Obwohl die unterschiedlichen flexiblen Airbagabdeckungen vorstehend jeweils am Beispiel ihrer Verwendung für ein (in ein Kraftfahrzeuglenkrad zu integrierendes) Fahrerairbagmodul beschrieben worden sind, kann eine solche flexible Airbagabdeckung auch bei beliebigen anderen Modultypen, wie zum Beispiel Beifahrer-, Seiten-, Kopf-, Kopf-Thorax-, Knie- und weiteren Airbagmodulen eingesetzt werden. Besonders vorteilhaft ist der Einsatz einer solchen Airbagabdeckung bei Airbagmodulen, bei denen zumindest ein Teil der Airbagabdeckung im Sichtbereich des oder der Fahrzeuginsassen liegt, so dass die besonderen Möglichkeiten bei der designerischen Ausgestaltung einer flexiblen Airbagabdeckung ausgeschöpft werden können.

Vorteilhaft ist die Airbagabdeckung bzw. das Material, aus dem die Airbagabdeckung besteht, derart flexibel und gegebenenfalls dehnbar und somit derart weich ausgebildet, dass zur Erzielung einer gleichmäßigen, geraden oder entlang einer vordefinierten Krümmung erstreckten Oberfläche der Airbagabdeckung, insbesondere zum Vermeiden von Unebenheiten/Falten in der Airbagabdeckung, eine entsprechende (Spann-)kraft auf die Airbagabdeckung auszuüben ist. Hierdurch kann diese zugleich auch formgebend auf ein darin angeordnetes Gassackpaket einwirken.

Die Verspannung der Airbagabdeckung kann zum Beispiel durch deren Straffung bei ihrer Fixierung an mindestens einem zugeordneten Halteteil, wie zum Beispiel einem Modulträger, erfolgen. Die wirkenden Spannkräfte sind dabei von verschiedenen Faktoren, wie zum Beispiel der Flexibilität, Weichheit und Dehnbarkeit des für die Airbagabdeckung verwendeten Materials, des Verhältnisses von gestraffter zu ungestraffter (gestreckter zu ungestreckter) Ausdehnung der Airbagabdeckung, vom Grad der Komprimierung des zusammengestauchten Gassackpakets usw. abhängig. Die Abstimmung derartiger Einflussfaktoren untereinander erlaubt die Verwendung unterschiedlicher flexibler Materialien für die Abdeckung, die teilweise ganz unterschiedliche Dehnbarkeiten aufweisen, wie zum Beispiel Textilien, Kunststoffe (insbesondere in Form von Folien), Leder, Kunstleder usw.

## Patentansprüche

1. Airbagabdeckung zur Aufnahme eines zu einem Gassackpaket zusammengestauchten Gassackes (3) für ein Airbagmodul eines Kraftfahrzeugs, mit
- einem oder mehreren Zuschnitten (60; 60a, 60b, 60c, 60d; 70) eines flexiblen Materials und
- Verbindungsstellen (62, 64; 72, 74), über die Bereiche des mindestens einen flexiblen Materialzuschnittes (60; 60a, 60b, 60c, 60d; 70) derart miteinander verbunden sind, dass der mindestens eine Materialzuschnitt (60; 60a, 60b, 60c, 60d; 70) eine das Gassackpaket zumindest teilweise aufnehmende Abdeckung (5) bildet,
wobei
a) die Airbagabdeckung (5) eine äußere Abdeckung des Airbagmodules bildet, welche im bestimmungsgemäß in ein Kraftfahrzeug eingebauten Zustand zumindest abschnittsweise für einen Fahrzeuginsassen sichtbar ist, und die Airbagabdeckung (5) einen das Gassackpaket umgreifenden Mantelabschnitt (6) und einen an einer Stirnseite des Mantelabschnittes (6) angeordneten Deckabschnitt (7) aufweist, wobei der Mantelabschnitt (6) und der Deckabschnitt (7) aus dem einen oder den mehreren Zuschnitten (60; 60a, 60b, 60c, 60d; 70) ausgebildet werden, und
b) zumindest ein Teil der Verbindungsstellen derart auftrennbar ausgelegt ist, dass die entsprechenden Verbindungsstellen (64, 74) bei einem bestimmungsgemäßen Aufblasen und Entfalten des Gassackes (3) in einem Crash-Fall aufgetrennt werden.

2. Airbagabdeckung nach Anspruch 1, **dadurch gekennzeichnet, dass** der mindestens eine Materialzuschnitt (60; 60a, 60b, 60c, 60d; 70) aus einem dehnbaren Material besteht.

3. Airbagabdeckung nach Anspruch 1, **dadurch gekennzeichnet, dass** der Deckabschnitt (7) beim Entfalten des Gassackes (3) zumindest teilweise vom Mantelabschnitt (6) gelöst wird.

4. Airbagabdeckung nach Anspruch 3, **dadurch gekennzeichnet, dass** der Deckabschnitt (7) derart mit dem Gassack (3) verbunden ist, dass der Deckabschnitt (7) auch nach dem Entfalten des Gassackes (3) zumindest teilweise mit diesem verbunden bleibt.

5. Airbagabdeckung nach einem der vorhergehenden Ansprüche, **dadurch gekennzeichnet, dass** der Mantelabschnitt (6) mindestens eine auftrennbare Verbindungsstelle (64) aufweist, die bei einem bestimmungsgemäßen Aufblasen und Entfalten des Gassackes (3) aufgetrennt wird, so dass sich in dem Mantelabschnitt (6) eine Öffnung für den sich entfaltenden Gassack (3) bildet.

6. Airbagabdeckung nach einem der vorhergehenden Ansprüche, **dadurch gekennzeichnet, dass** die Airbagabdeckung (5) Fixiermittel (4) aufweist, über die die Airbagabdeckung (5) an einem zugeordneten Halteteil (1) fixierbar ist.

7. Airbagabdeckung nach Anspruch 6, **dadurch gekennzeichnet, dass** die Fixiermittel (4) einen an der Airbagabdeckung (5) umlaufenden Fixierring umfassen, über den die Airbagabdeckung (5) am Halteteil (1) verspannbar ist.

8. Airbagabdeckung nach einem der vorhergehenden Ansprüche, **dadurch gekennzeichnet, dass** die Airbagabdeckung (5) unter Spannung an einem zugeordneten Halteteil (1) gehalten wird, um der flexiblen Airbagabdeckung (5) eine definierte Form aufzuzwingen.

9. Airbagabdeckung nach einem der vorhergehenden Ansprüche, **dadurch gekennzeichnet, dass** die Airbagabdeckung (5) zur Aufnahme des Gassackes (3) über den Gassack (3) stülpbar ist, wobei die Airbagabdeckung (5) umgeschlagen wird.

10. Airbagabdeckung nach einem der vorhergehenden Ansprüche, **dadurch gekennzeichnet, dass** der mindestens eine Materialzuschnitt (60; 60a, 60b, 60c, 60d; 70) vor der Herstellung von Verbindungen an den Verbindungsstellen (62, 64; 72, 74) als ein ebener Zuschnitt ausgebildet ist.

11. Verfahren zur Herstellung einer Airbagabdeckung nach einem der vorhergehenden Ansprüche, wobei die Airbagabdeckung (5) einen das Gassackpaket umgreifenden Mantelabschnitt (6) und einen an einer Stirnseite des Mantelabschnittes (6) angeordneten Deckabschnitt (7) aufweist, wobei die Airbagabdeckung (5) aus mindestens einem aus einem flexiblen Material bestehenden Materialzuschnitt (60; 60a, 60b, 60c, 60d; 70) hergestellt wird, indem Bereiche des mindestens einen Materialzuschnittes (60; 60a, 60b, 60c, 60d; 70) miteinander verbunden werden, wobei der Mantelabschnitt (6) und der Deckabschnitt (7) aus dem mindestens einen Materialzuschnitt (60; 60a, 60b, 60c, 60d; 70) ausgebildet werden, wobei zumindest ein Teil der Verbindungsstellen (62, 64; 72, 74) auftrennbar ausgelegt wird, so dass die entsprechenden Verbindungsstellen bei einem bestimmungsgemäßen Aufblasen und Entfalten des Gassackes (3) in einem Crash-Fall auftrennbar sind.

12. Verfahren zur Anordnung eines Gassackpaketes in einer flexiblen Airbagabdeckung (5) nach einem der Ansprüche 1 bis 10, wobei die Airbagabdeckung (5) zunächst derart umgestülpt wird, dass die Außenseite (6a, 7a) der Airbagabdeckung (5) nach innen weist und die Innenseite (6i, 7i) der Airbagabdeckung (5) nach außen weist, und wobei anschließend die Airbagabdeckung (5) durch Umschlagen über das Gassackpaket gestülpt wird, so dass dann der das Gassackpaket bildende Gassack (3) von der Airbagabdeckung (5) aufgenommen ist und die Außenseite (6a, 7a) der Airbagabdeckung (5) wieder nach außen sowie die Innenseite (6i, 7i) der Airbagabdeckung (5) wieder nach innen weist.

13. Verfahren nach Anspruch 12, **dadurch gekennzeichnet, dass** vor dem Stülpen der Airbagabdeckung (5) über das Gassackpaket der Gassack (3) an mindestens einer Befestigungsstelle (32) mit der Airbagabdeckung (5) verbunden wird.

14. Verfahren nach Anspruch 13, **dadurch gekennzeichnet, dass** der Gassack (3) zu einem Gassackpaket zusammengestaucht wird, nachdem die Airbagabdeckung (5) an mindestens einer Befestigungsstelle (32) mit dem Gassack (3) verbunden worden ist.

15. Verfahren nach einem der Ansprüche 12 bis 14, **dadurch gekennzeichnet, dass** die Airbagabdeckung (5) nach dem Stülpen über das Gassackpaket an einem tragenden Teil, insbesondere einem Modulträger (1), fixiert wird.

## Claims

1. Airbag cover for receiving an airbag (3) compressed into an airbag package for an airbag module of a motor vehicle, comprising
- one or more precut sections (60; 60a, 60b, 60c, 60d; 70) of a flexible material and
- connecting sites (62, 64; 72, 74), by way of which regions of the at least one flexible precut material section (60; 60a, 60b, 60c, 60d; 70) are connected to each other such that the at least one precut section (60; 60a, 60b, 60c, 60d; 70) forms a cover (5) that at least partially receives the airbag package,
whereby
a) the airbag cover (5) forms an outer cover of the airbag module which is at least in sections visible for a vehicle occupant when installed into a motor vehicle as intended and the airbag cover (5) has a shell section (6) encompassing the airbag package and a cover section (7) arranged on a front side of the shell section (6), wherein the shell section (6) and the cover section (7) are formed of the one or more precut sections (60; 60a, 60b, 60c, 60d; 70) and
b) at least some of the connecting sites are configured disconnectable such that the corresponding connecting sites (64, 74) are disconnected upon inflation and deployment of the airbag (3) as intended in the event of a crash.

2. Airbag cover according to claim 1, **characterised in that,** the at least one precut material section (60; 60a, 60b, 60c, 60d; 70) is made of a stretchable material.

3. Airbag cover according to claim 1, **characterised in that,** the cover section (7) is at least partially detached from the shell section (6) during deployment of the airbag (3).

4. Airbag cover according to claim 3, **characterised in that,** the cover section (7) is connected with the airbag (3) such that the cover section (7) remains at least partially connected to the airbag (3) also after its deployment.

5. Airbag cover according to one of the preceding claims, **characterised in that,** the shell section (6) has at least one disconnectable connecting site (64) which is disconnected upon inflation and deployment of the airbag (3) as intended so that an opening for the deploying airbag (3) is formed in the shell section (6).

6. Airbag cover according to one of the preceding claims, **characterised in that,** the airbag cover (5) has fixing means (4) through which the airbag cover (5) is fixable to a dedicated holding means (1).

7. Airbag cover according to claim 6, **characterised in that,** the fixing means (4) comprise a fixinging ring which revolves on the airbag cover (5) via which the airbag cover (5) can be braced against the holding means (1).

8. Airbag cover according to one of the preceding claims, **characterised in that,** the airbag cover (5) is held on a dedicated holding means (1) under tension in order to impose a defined form onto the flexible airbag cover (5).

9. Airbag cover according to one of the preceding claims, **characterised in that,** the airbag cover (5) can be put over the airbag (3) for receiving the airbag (3), wherein the airbag cover (5) is turned over.

10. Airbag cover according to one of the preceding claims, **characterised in that,** the at least one precut material section (60; 60a, 60b, 60c, 60d; 70) is formed as a flat precut part before establishing connections at the connecting sites (62, 64; 72, 74).

11. Method for the production of an airbag cover according to one of the preceding claims, wherein the airbag cover (5) has a shell section (6) encompassing the airbag package and a cover section (7) arranged on a front side of the shell section (6), wherein the airbag cover (5) is obtained from at least one precut material section (60; 60a, 60b, 60c, 60d; 70) being made of a flexible material by connecting regions of the at least one precut material section (60; 60a, 60b, 60c, 60d; 70) with each other, wherein the shell section (6) and the cover section (7) are formed of the at least one precut material section (60; 60a, 60b, 60c, 60d; 70), wherein at least some of the connecting sites (62, 64; 72, 74) are configured disconnectable such that the corresponding connecting sites are disconnectable upon the inflation and deployment of the airbag (3) as intended in the event of a crash.

12. Method for arranging an airbag package in the flexible airbag cover (5) according to one of the claims 1 to 10, wherein the airbag cover (5) is at first folded such that the outer side (6a, 7a) of the airbag cover (5) points inwardly and the inner side (6i, 7i) of the airbag cover (5) points outwardly, and wherein subsequently the airbag cover (5) is put over the airbag package by turning over so that the airbag (3) forming the airbag package is then received by the airbag cover (5) and the outer side (6a, 7a) of the airbag cover (5) points again outwardly and the inner side (6i, 7i) of the airbag cover (5) points again inwardly.

13. Method according to claim 12, **characterised in that,** before putting the airbag cover (5) over the airbag package the airbag (3) is connected with the airbag cover (5) on at least one connecting site (32).

14. Method according to claim 13, **characterised in that,** the airbag (3) is compressed to an airbag package after the airbag cover (5) was connected to the airbag (3) on at least one connecting site (32).

15. Method according to one of the claims 12 to 14, **characterised in that,** the airbag cover (5) is fixed to a supporting part, in particular a module rack (1), after putting over the airbag package.

## Revendications

1. Protection d'airbag pour le logement d'un coussin de gaz (3) comprimé en un paquet de coussin de gaz pour un module d'airbag d'un véhicule à moteur, avec
- une ou plusieurs découpes (60 ; 60a, 60b, 60c, 60d ; 70) d'un matériau flexible et
- des points de liaison (62, 64 ; 72, 74), par les quelles des zones de l'au moins une découpe de matériau flexible (60 ; 60a, 60b, 60c, 60d ; 70) sont reliés entre eux, de façon à ce que l'au moins une découpe de matériau (60 ; 60a, 60b, 60c, 60d ; 70) constitue une protection (5) logeant au moins partiellement le paquet de coussin de gaz,
a) la protection d'airbag (5) constitue une protection extérieure du module d'airbag qui est visible, dans un état monté dans un véhicule à moteur, au moins partiellement pour un passager du véhicule et la projection d'airbag (5) comprend une section de revêtement (6) entourant le paquet de coussin de gaz et une section de recouvrement (7) disposée sur un côté frontal de la section de revêtement (6), la section de revêtement (6) et la section de recouvrement (7) étant constituées de l'une ou des plusieurs découpes (60 ; 60a, 60b, 60c, 60d ; 70), et
b) au moins une partie des points de liaison sont séparables de façon à ce que les points de liaison (64, 74) correspondants soit séparés lors d'un gonflage et d'un dépliage approprié du coussin de gaz (3) dans le cas d'un crash.

2. Protection d'airbag selon la revendication 1, **caractérisée en ce que** l'au moins une découpe de matériau (60 ; 60a, 60b, 60c, 60d ; 70) est constituée d'un matériau dilatable.

3. Protection d'airbag selon la revendication 1, **caractérisée en ce que** la section de recouvrement (7) est détachée au moins partiellement de la section de revêtement (6) lors du dépliage du coussin de gaz (3).

4. Protection d'airbag selon la revendication 3, **caractérisée en ce que** la section de recouvrement (7) est reliée avec le coussin de gaz (3) de façon à ce que la section de recouvrement (7) reste reliée avec le coussin de gaz (3) au moins partiellement même après le dépliage de celui-ci.

5. Protection d'airbag selon l'une des revendications précédentes, **caractérisée en ce que** la section de revêtement (6) comprend au moins un point de connexion (64) séparable, qui, lors du gonflage et du dépliage approprié du coussin de gaz (3), est séparé de façon à ce qu'une ouverture se forme dans la section de revêtement (6) pour le coussin de gaz (3) dépliant.

6. Protection d'airbag selon l'une des revendications précédentes, **caractérisée en ce que** la protection d'airbag (5) comprend des moyens de fixation (4) grâce auxquels la protection d'airbag (5) peut être fixée à un élément de maintien (1) correspondant.

7. Protection d'airbag selon la revendication 6, **caractérisée en ce que** les moyens de fixation (4) comprennent une bague de fixation entourant la protection d'airbag (5), grâce à laquelle la protection d'airbag (5) peut être tendue sur l'élément de maintien (1).

8. Protection d'airbag selon l'une des revendications précédentes, **caractérisée en ce que** la protection d'airbag (5) est maintenue sous tension sur l'élément de maintien (1) correspondant, afin de forcer la protection d'airbag (5) flexible à adopter une forme définie.

9. Protection d'airbag selon l'une des revendications précédentes, **caractérisée en ce que** la protection d'airbag (5) peut être évasée au-dessus du coussin de gaz (3) pour le logement du coussin de gaz (3), la protection d'airbag (5) étant enveloppée.

10. Protection d'airbag selon l'une des revendications précédentes, **caractérisée en ce que** l'au moins une découpe de matériau (60 ; 60a, 60b, 60c, 60d ; 70) est formée comme une découpe plate avant de réaliser des liaisons au niveau des points de liaison (62, 64 ; 72, 74).

11. Procédé de fabrication d'une protection d'airbag selon l'une des revendications précédentes, la protection d'airbag (5) comprenant une section de revêtement (6) entourant le paquet de coussin de gaz et une section de recouvrement (7) disposée sur une côté frontal de la section de revêtement (6), la protection d'airbag (5) étant réalisée à partir d'au moins une découpe de matériau (60 ; 60a, 60b, 60c, 60d ; 70) constituée d'un matériau flexible, en reliant des zones de l'au moins une découpe de matériau (60 ; 60a, 60b, 60c, 60d ; 70) entre elles, la section de revêtement (6) et la section de recouvrement (7) étant constituées de l'au moins une découpe de matériau (60 ; 60a, 60b, 60c, 60d ; 70), au moins une partie des points de liaison (62, 64 ; 72, 74) étant séparables, de façon à ce que les points de liaison correspondants puissent être séparés lors du gonflage et du dépliage approprié du coussin de gaz (3) dans le cas d'un crash.

12. Procédé de disposition d'un paquet de coussin de gaz dans une protection d'airbag flexible (5) selon l'une des revendications 1 à 10, la protection d'airbag (5) étant d'abord évasée de façon à ce que le côté extérieur (6a, 7a) de la protection d'airbag (5) soit orienté vers l'intérieur et le côté intérieur (6i, 7i) de la protection d'airbag (5) soit orienté vers l'extérieur et la protection d'airbag (5) étant ensuite évasée sur le paquet de coussin de gaz de façon à ce que le coussin de gaz (3) constituant le paquet de coussin de gaz soit logé par la protection d'airbag (5) et à ce que le côté extérieur (6a, 7a) de la protection d'airbag (5) soit à nouveau orienté vers l'extérieur et que le côté intérieur (6i, 7i) de la protection d'airbag (5) soit à nouveau orienté vers l'intérieur.

13. Procédé selon la revendication 12, **caractérisé en ce que**, avant l'évasement de la protection d'airbag (5) sur le paquet de coussin de gaz, le coussin de gaz (3) est relié à la protection d'airbag (5) au niveau d'au moins un point de fixation (32).

14. Procédé selon la revendication 13, **caractérisé en ce que** le coussin de gaz (3) est comprimé en un paquet de coussin de gaz après que la protection d'airbag (5) soit reliée avec le coussin de gaz (3) au niveau d'au moins un point de fixation (32).

15. Procédé selon l'une des revendications 12 à 14, **caractérisé en ce que** la protection d'airbag (5) est fixée, après l'évasement sur le paquet de coussin de gaz au niveau d'un élément porteur, plus particulièrement d'un support de module (1).
